Europäisches Patentamt

**European Patent Office**

**Office européen des brevets**

(19)

(11) Veröffentlichungsnummer: **0 032 677**
**B1**

(12) **EUROPÄISCHE PATENTSCHRIFT**

(45) Veröffentlichungstag der Patentschrift:
27.07.83

(51) Int. Cl.³: **H 04 Q 3/54**

(21) Anmeldenummer: **81100072.8**

(22) Anmeldetag: **08.01.81**

(54) Verfahren zur Überwachung belegter Einrichtungen in einer Fernmelde-, insbesondere Fernsprechvermittlungsanlage.

(30) Priorität: **18.01.80 CH 407/80**

(43) Veröffentlichungstag der Anmeldung:
**29.07.81 Patentblatt 81/30**

(45) Bekanntmachung des Hinweises auf die Patenterteilung:
**27.07.83 Patentblatt 83/30**

(84) Benannte Vertragsstaaten:
**DE NL**

(56) Entgegenhaltungen:
**US-A-3 495 220**
**FERNMELDE-PRAXIS, Band 48, Nr. 3, 10. Februar 1971, Seiten 137—143, Berlin, DE. J. CLAUS: »Anwendung der Elektronik in der Vermittlungstechnik — 4.3 Wegsuche im Abbild der Koppelanordnung**
**INSTITUTE OF ELECTRICAL AND ELECTRONICS ENGINEERS. INTERNATIONAL SWITCHING SYMPOSIUM RECORD, CAMBRIDGE 6.—9. Juni 1972, Seiten 565—569, New York, U.S.A. R. P. ALMQUIST: »Software protection in No. 1 ESS«**

(73) Patentinhaber: **SIEMENS-ALBIS AKTIENGESELLSCHAFT, EGA1/Verträge und Patente Postfach, CH-8047 Zürich (CH)**

(72) Erfinder: **Rippstein, Eugen, Brunnenzelgstrasse, CH-8904 Aesch (CH)**

Verfahren zur Überwachung belegter Einrichtungen in einer Fernmelde-,
insbesondere Fernsprechvermittlungsanlage

Die vorliegende Erfindung betrifft ein Verfahren gemäß dem Oberbegriff des Anspruchs 1.

Am Aufbau sowie an der Aufrechterhaltung von Gesprächsverbindungen in Fernsprechanlagen sind jeweils mehrere Einrichtungen, wie Teilnehmeranschlußschaltungen, Sprechwege, Wahlaufnahmesätze sowie Verbindungssätze beteiligt. Die Steuerung und Überwachung dieser Einrichtungen kann durch zugeordnete Teilsteuerwerke erfolgen, in denen u. a. auch für jeweils bestehende Verbindungen maßgebende Daten in einem Datenspeicher festgehalten sind. Die Teilsteuerwerke bilden Funktionseinheiten, die über Datenübertragungsleitungen miteinander Meldungen und Daten austauschen. Aus betriebssicherheitstechnischen Gründen ist es notwendig, an aufgebauten Gesprächsverbindungen beteiligte Einrichtungen auf ihren Belegungszustand zu überwachen und dadurch zu verhindern, daß eine dieser Einrichtungen fälschlicherweise auch dann noch als belegt gekennzeichnet bleibt, wenn die betreffende Verbindung bereits ausgelöst und abgebaut worden ist. Dies kann dann der Fall sein, wenn nach Auslösung einer Verbindung die Freigabe der daran beteiligten Einrichtungen veranlassende Meldungen aus irgendwelchen Gründen verfälscht oder überhaupt nicht zum entsprechenden Teilsteuerwerk gelangen und daher diese Einrichtungen belegt bleiben und für neue Verbindungen nicht mehr zur Verfügung stehen. Solche Fehler wirken sich natürlich ungünstig auf die Leistungsfähigkeit einer Vermittlungsanlage aus und können diese unter Umständen ganz blockieren.

In »Fernmeldepraxis«, Band 48, Nr. 3, Seiten 137−143, ist im Zusammenhang mit der Wegesuche im Koppelfeld eines Vermittlungssystems der Fall erwähnt, wo durch einen Fehler der tatsächliche Belegungszustand im Koppelfeld nicht mit dessen Abbild in einem Belegungszustandsspeicher übereinstimmt. Um zu verhindern, daß dadurch Verbindungswegeabschnitte fälschlicherweise als »besetzt« gekennzeichnet bleiben, werden in diesem Vermittlungssystem zur Synchronisation zwischen Koppelfeld und Speicher von Zeit zu Zeit sämtliche Verbindungszustandsspeicher abgefragt und die dort jeweils eingetragenen Wege im Belegungszustandsspeicher als »besetzt« und die nicht eingetragenen Wege als »frei« gekennzeichnet. Ein fälschlicherweise als »besetzt« geltender Abschnitt ist solange nicht verfügbar, bis die nächste Synchronisation durchgeführt wird. Trifft dies für mehrere Abschnitte gleichzeitig zu, kann eine merkliche Verkehrseinschränkung eintreten.

Ein ähnliches Vorgehen ist aus der US-A-3 495 220 bekannt, wo eine Vermittlungsanlage beschrieben ist, in der der tatsächliche Belegungszustand der an Verbindungen beteiligten Einrichtungen in einem Speicher festgehalten ist, dessen Inhalt beim Aufbau von neuen Verbindungen herangezogen wird. Durch Abfrage des Inhalts eines weiteren Speichers, der Informationen über die jeweils bestehenden Verbindungen enthält, wird der erstgenannte Speicher aktualisiert. Im weiteren Speicher sind unter anderem Belegungsinformationen eingetragen, die mit einem Kontrollbit ergänzt sind. Das Kontrollbit ist jedoch an der Regeneration des Belegungszustandsspeichers nicht direkt beteiligt. Es gibt lediglich an, ob die betreffende Einrichtung verfügbar ist oder nicht.

Der vorliegenden Erfindung liegt die Aufgabe zugrunde, ein Verfahren anzugeben, das die eingangs erwähnten fälschlichen Belegungen in einer Fernsprechvermittlungsanlage raschmöglichst feststellt und die betreffenden Einrichtungen unverzüglich freigibt. Die Lösung gelingt erfindungsgemäß durch die im Anspruch 1 angegebenen Maßnahmen. Ausbildungen der Erfindung sind in weiteren Ansprüchen angegeben.

Die erfindungsgemäße Überwachung von bestehenden Verbindungen in einer Vermittlungsanlage gewährleistet in einfacher Weise, daß nicht mehr an einer Verbindung beteiligte Einrichtungen in jedem Fall rasch freigegeben werden und damit nicht während einer längeren Zeitspanne fälschlicherweise unbenützbar sind. Die Betriebssicherheit der Anlage bleibt daher auch bei gestörtem Meldungsaustausch zwischen einzelnen Funktionseinheiten der Anlage erhalten. Ausgangspunkt der Überwachung ist jeweils der Belegungszustand von an Verbindungen beteiligten peripheren Einrichtungen, wie Teilnehmeranschlußschaltungen oder Verbindungssätze.

Anhand von Zeichnungen wird die Erfindung im folgenden beispielsweise näher erläutert. Es zeigt

Fig. 1 das Blockschaltbild einer Fernsprechvermittlungsanlage, in der die Erfindung anwendbar ist,

Fig. 2 zur Erläuterung der Erfindung notwendige Einzelheiten dieser Vermittlungsanlage,

Fig. 3 eine zeitliche Darstellung des Verfahrensablaufes.

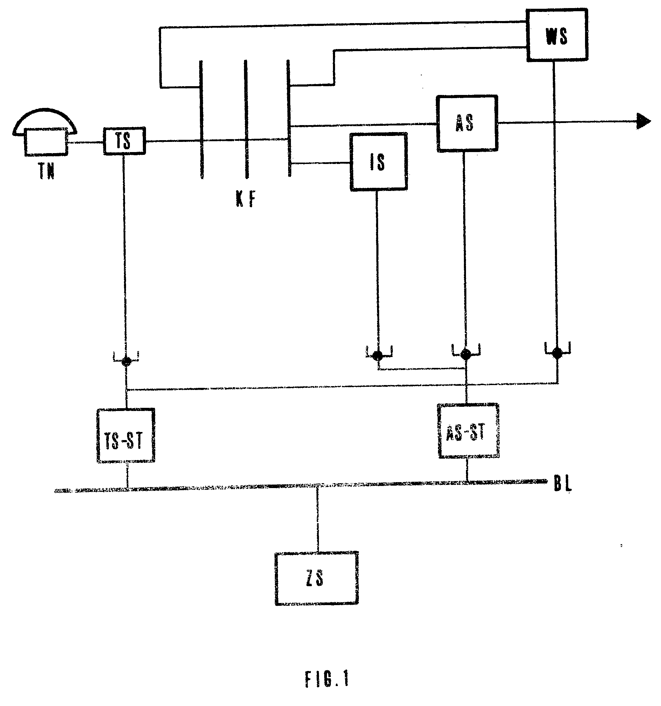

In Fig. 1 sind Einzelheiten einer vollelektronischen Fernsprechnebenstellenanlage dargestellt, soweit sie im Zusammenhang mit der Erfindung von Interesse sind. Die Bedeutung der gezeigten Systemteile wird aus der nachfolgenden kurzen Beschreibung der beim Aufbau einer internen Verbindung in dieser Anlage ablaufenden Vorgänge ersichtlich. Es sollen also zwei an dieser Nebenstellenanlage angeschlossene Teilnehmer miteinander verbunden werden.

Hebt ein Teilnehmer TN seinen Handapparat ab, wird in der zugehörigen Teilnehmeranschlußschaltung TS das Schließen der Teilnehmerleitungsschleife erkannt. Das einer Vielzahl von Teilnehmern TN zugeordnete Teilnehmersteuerwerk TS-ST fragt ständig den Zustand der Teilnehmerleitungsschleifen dieser Teilnehmer nacheinander ab (Scan-Prinzip) und hält den ermittelten Zustand in einem Zustandsspeicher fest. In diesem Speicher ist somit der aktuelle Schleifenzustand aller angeschlossenen Teilnehmer enthalten. Das Teilnehmersteuerwerk TS-ST erkennt innerhalb eines Abfragezyklus die Neubelegung durch den Teilnehmer TN und meldet diese Neubelegung dem zentralen Steuerwerk ZS, das daraufhin einen freien Wahlaufnahmesatz WS und einen freien Weg vom Teilnehmer TN über das Koppelfeld KF zu diesem Wahlaufnahmesatz WS sucht. Das Koppelfeld KF kann elektronische Koppelpunkte, wie z. B. Transistoren, aufweisen und ein- oder mehrstufig sein. Nach erfolgter Durchschaltung sendet der Wahlaufnahmesatz WS dem Teilnehmer TN den Wählton. Ein Wahlempfänger im Wahlaufnahmesatz WS nimmt die beispielsweise in einem $2 \times (\frac{1}{4})$ Frequenzcode eintreffenden Wählsignale auf, bestimmt deren Frequenz und setzt die erkannte Kombination des Wählzeichens in ein Codewort um. Sobald der Wahlaufnahmesatz WS die erste Wahlziffer decodiert hat, gibt er diese an das Teilnehmersteuerwerk TS-ST, wo sie — wie auch alle nachfolgenden Ziffern — gespeichert und zudem an das zentrale Steuerwerk ZS weitergeleitet wird. Das zentrale Steuerwerk ZS bewertet die erste Ziffer; handelt es sich dabei nicht um eine Kennziffer, dann erkennt das zentrale Steuerwerk ZS den Wunsch nach einer Intern- (Haus-)verbindung und sucht demzufolge einen freien Internverbindungssatz IS und einen freien Weg über das Koppelfeld KF vom wählenden Teilnehmer TN zum freien Internverbindungssatz IS. Das zentrale Steuerwerk ZS steht zwecks Meldungsaustausch über ein Busleitungssystem BL sowohl mit dem erwähnten Teilnehmersteuerwerk TS-ST als auch mit einem der Steuerung von Internverbindungssätzen IS und Externverbindungssätzen AS dienenden Satzsteuerwerk AS-ST in Verbindung. Sobald die vom Teilnehmer TN ausgesendete Wahlinformation vollständig ist, werden die Ziffern vom Teilnehmersteuerwerk TS-ST dem zentralen Steuerwerk ZS übergeben, das den zu rufenden Teilnehmer ermittelt, einen freien Weg vom Internverbindungssatz IS über das Koppelfeld KF zu diesem Teilnehmer sucht und den Weg vom wählenden Teilnehmer TN zum Internverbindungssatz IS durchschaltet. Hierauf wird dem gerufenen Teilnehmer ein Rufsignal aus seiner Teilnehmerschaltung und dem rufenden Teilnehmer ein Rufkontrollsignal aus dem Internverbindungssatz IS zugeführt. Wenn der gerufene Teilnehmer sich meldet, erkennt die zugehörige Teilnehmerschaltung Schleifenschluß, worauf die Verbindung zwischen dem rufenden und dem gerufenen Teilnehmer über den Internverbindungssatz IS durchgeschaltet wird. Ein Internverbindungssatz IS wird immer dann belegt, wenn eine Internverbindung, d. h. ein zwei der gleichen Nebenstellenanlage angehörende Teilnehmer miteinander verbindender Sprechweg aufzubauen ist.

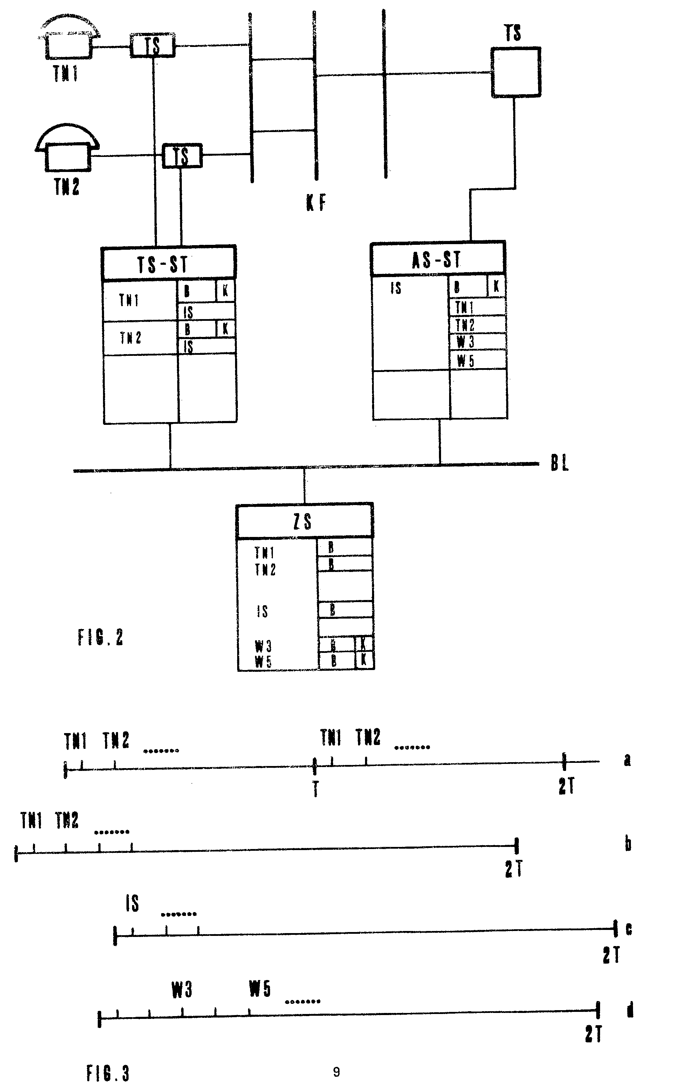

Verbindungen von einem Teilnehmer TN zum öffentlichen Fernsprechnetz verlaufen über einen in Fig. 1 ebenfalls eingezeichneten Extern- (Amts-)Verbindungssatz AS. Auf Einzelheiten zum Aufbau einer Amtsverbindung soll hier nicht eingegangen werden; es wird vielmehr im folgenden anhand von Fig. 2 die Erfindung im Zusammenhang mit der zuvor beschriebenen Internverbindung erläutert.

Es sei angenommen, diese Internverbindung bestehe zwischen zwei Teilnehmern TN1 und TN2, wobei die Verbindung über zwei Wege im Koppelfeld KF und einen Internverbindungssatz IS verlaufe. In einem Verbindungsdatenspeicher des Teilnehmersteuerwerkes TS-ST ist für die beiden Teilnehmer TN1 und TN2 je eine Belegungsinformation B eingetragen; ferner ist in diesem Speicher auch der Verbindungssatz IS festgehalten, über den die Teilnehmer TN1 und TN2 miteinander verbunden sind. In einem Verbindungsdatenspeicher des Satzsteuerwerkes AS-ST ist der an der Verbindung beteiligte Internverbindungssatz IS mit einer Belegungsinformation B als belegt gekennzeichnet; außerdem sind in diesem Speicher die beiden miteinander verbundenen Teilnehmer TN1 und TN2 sowie die im Koppelfeld KF belegten Wege, z. B. die Wege W3, W5, eingeschrieben. Schließlich sind in einem Verbindungsdatenspeicher des zentralen Steuerwerkes ZS im Zuge des Verbindungsaufbaus die beiden Teilnehmer TN1 und TN2, der an der Verbindung beteiligte Internverbindungssatz IS und die Wege W3, W5 als belegt eingetragen worden.

Im Falle eines Auslösens dieser Verbindung müssen die in den genannten Steuerwerken eingetragenen Verbindungsdaten möglichst unverzüglich gelöscht bzw. die belegten Einrichtungen, also die Teilnehmerschaltungen TS, der Internverbindungssatz IS sowie die betreffenden Wege W3 und W5 freigeschrieben werden. Voraussetzung dazu ist ein ungestörter und fehlerfreier Meldungsverkehr zwischen diesen Steuerwerken über das Busleitungssystem BL. Dieser Meldungsverkehr kann beispielsweise durch Eingriffe von außen bei Wartungsarbeiten an der in Betrieb stehenden Anlage derart beeinflußt werden, daß gewisse Meldungen, die im Falle einer Verbindungsauslösung zwischen einzelnen Funktionseinheiten, wie den genannten Steuerwerken, ausgetauscht werden müssen, verfälscht werden oder überhaupt nicht bis zur entsprechenden Funktionseinheit gelangen. Demzufolge bleibt eine in einem Verbindungsdatenspeicher als belegt eingetragene Einrichtung weiterhin als belegt gekennzeichnet, obwohl sie tatsächlich nicht mehr an einer Verbindung beteiligt ist. Der gleiche Effekt kann auch auftreten, wenn betriebsinterne Störungen oder programmtechnische Unzulänglichkeiten den Meldungsaustausch zwischen einzelnen Funktionseinheiten ungünstig beeinflussen.

Um solche unerwünschten Auswirkungen zu verhindern, wird nun gemäß der Erfindung wie folgt vorgegangen: Bei Belegung einer Einrichtung werden im Verbindungsdatenspeicher des entsprechenden Steuerwerkes bestimmte Belegungsinformationen B mit einer Verbindungskontrollinformation ergänzt, indem beispielsweise zusätzlich ein im folgenden als Kontrollbit K bezeichnetes Bit gesetzt wird. Für die aufgebaute Internverbindung zwischen den beiden Teilnehmern TN1 und TN2 sei für diese Teilnehmer im Teilnehmersteuerwerk TS-ST, für den belegten Internverbindungssatz IS im Satzsteuerwerk AS-ST und für die im Koppelfeld KF belegten Wege im zentralen Steuerwerk ZS zusätzlich zur Belegungsinformation B das Kontrollbit K gesetzt. Dieses Bit wird nun wie nachstehend beschrieben periodisch gelöscht und wieder gesetzt. Das periodische Setzen (Regeneration der Kontrollbit K) wird vom Teilnehmersteuerwerk TS-ST aus veranlaßt. Dieses fragt innerhalb einer Periode T im erwähnten Zustandsspeicher aufeinanderfolgend alle Teilnehmer TN einmal auf ihren Belegungszustand ab. Ermittelt das Teilnehmersteuerwerk TS-ST einen Teilnehmer TN als belegt, dann sendet es eine Meldung zum Satzsteuerwerk AS-ST, in dessen Verbindungsdatenspeicher für jeden belegten Verbindungssatz alle an der betreffenden Verbindung beteiligten Einrichtungen (Nummer des Verbindungssatzes mit Belegungsinformation, Teilnehmer und Wege) eingetragen sind. Aufgrund der vom Teilnehmersteuerwerk TS-ST eingehenden Meldung wird nun vom Satzsteuerwerk AS-St aus veranlaßt, daß für die an der Verbindung beteiligten Einrichtungen in den entsprechenden Verbindungsdatenspeichern das Kontrollbit K — sofern es nicht schon gesetzt ist — gesetzt wird. Im vorliegenden Beispiel wird das Kontrollbit K im Teilnehmersteuerwerk TS-ST für die beiden Teilnehmer TN1 und TN2, im Satzsteuerwerk AS-ST für den Internverbindungssatz IS und im zentralen Steuerwerk ZS für die beteiligten Wege W3, W5 periodisch gesetzt. Somit wird innerhalb eines Abtastzyklus T des Teilnehmersteuerwerkes TS-ST für sämtliche durch bestehende Verbindungen belegten Einrichtungen mindestens einmal das Kontrollbit K gesetzt.

Unabhängig vom Abtastzyklus des Teilnehmersteuerwerkes TS-ST wird nun in den einzelnen Steuerwerken das Vorhandensein der Kontrollbit K periodisch überprüft, wobei die gewählte Periodendauer größer als die Abtastperiode im Teilnehmersteuerwerk TS-ST ist, beispielsweise doppelt so groß. Ist das Kontrollbit K gesetzt, dann wird es gelöscht. Ist jedoch das Kontrollbit K nicht gesetzt, die zugehörige Einrichtung aber als belegt gekennzeichnet, dann liegt ein durch einen fehlerhaften Meldungsaustausch hervorgerufener Zustand vor, indem beim Auslösen der Verbindung die Belegungsinformation B für die betreffende Einrichtung nicht gelöscht wurde. In diesem Falle wird für diese Einrichtung die Belegungsinformation B gelöscht, da die Einrichtung nicht mehr an einer Verbindung beteiligt sein kann.

Die Einrichtung wird also freigeschrieben und steht wiederum für eine neue Verbindung zur Verfügung. In Fig. 3 ist der beschriebene Vorgang für das Setzen und Löschen der Kontrollbit K veranschaulicht. Dabei ist auf der Zeitachse a der Ablauf für die Abfrage des Belegungszustandes der Teilnehmer TN durch das Teilnehmersteuerwerk TS-ST und damit der Ablauf für das Setzen der Kontrollbit K der an Verbindungen beteiligten Einrichtungen dargestellt. Die Zeitachse b zeigt die zeitliche Aufeinanderfolge für das Löschen der Kontrollbit K im Teilnehmersteuerwerk TS-ST, die Zeitachse c zeigt den Löschrhythmus im Satzsteuerwerk AS-ST und die Zeitachse d denjenigen im zentralen Steuerwerk ZS für die belegten Wege.

Die Anwendung der Erfindung ist nicht auf den beschriebenen Fall einer bestehenden Internverbindung beschränkt. In der gleichen Art können auch die an einer über einen Externverbindungssatz AS zum öffentlichen Fernsprechnetz führenden Verbindung beteiligten Einrichtungen überwacht werden. Ebenso können auch im Zuge eines Verbindungsaufbaus vorübergehend an einer Verbindung beteiligte Wahlaufnahmesätze WS in die erfindungsgemäße Überwachung miteinbezogen werden, indem sie während ihrer Belegung beispielsweise im Teilnehmersteuerwerk TS-ST als belegt gekennzeichnet sind und die Belegungsinformation ebenfalls mit einem periodisch gesetzten und gelöschten Kontrollbit K ergänzt wird.

Vor allem in größeren Fernsprechanlagen, in denen eine große Anzahl von Verbindungen gleichzeitig aufgebaut sein kann, kann der beschriebene Setzrhythmus zu einer so großen Belastung der daran beteiligten Steuerwerke führen, daß deren dynamische Leistungsfähigkeit für einen geordneten Betriebsablauf nicht mehr ausreicht. Die folgende Weiterbildung der Erfindung ermöglicht eine Herabsetzung dieser Belastung: Im Gegensatz zum vorher beschriebenen Vorgehen, wo das Kontrollbit K für alle an Verbindungen beteiligten Einrichtungen in einem zufälligen Zeitpunkt nach dem Aufbau der Verbindung gesetzt wird, wird nun unmittelbar beim Zustandekommen einer Verbindung ein dieser zugeordnetes Zeitglied gestartet, dessen Zeitkonstante größer als die mittlere Dauer der Gespräche gewählt ist. Die Regeneration der Kontrollbit K für diese Verbindung erfolgt jeweils nach Ablauf dieses Zeitgliedes. Dadurch, daß ein großer Teil der Verbindungen vor Ablauf dieses Zeitgliedes beendet sein wird, ergibt sich eine reduzierte Belastung der Steuerwerke. Das Zeitglied wird jeweils nach erfolgter Regeneration (Setzen des Bits, wenn nicht gesetzt) des Kontrollbits K solange erneut gestartet, wie die nach dem erfindungsgemäßen Verfahren zu überwachende Verbindung besteht. Die Periodendauer für die periodische Löschung der Kontrollbit K wird dann beispielsweise zweimal so groß wie die Zeitkonstante des Zeitgliedes gewählt.

Die beschriebene Überwachung von an Verbindungen beteiligten teilnehmer- und verbindungsindividuellen Einrichtungen verhindert in einfacher Weise, daß diese Einrichtungen (Teilnehmeranschlußschaltungen, Sätze und Wege) über eine längere Zeitspanne fälschlicherweise als belegt gelten können. Dabei ist es übrigens völlig belanglos, ob die an einer Verbindung beteiligten Steuerwerke in der gezeigten Art einzeln vorhanden sind oder ob beispielsweise das Teilnehmersteuerwerk TS-ST und das Satzsteuerwerk AS-ST zu einem einzigen peripheren Steuerwerk zusammengefaßt sind, das mit dem zentralen Steuerwerk ZS zusammenwirkt. Die Anwendung der Erfindung ist überall dort zweckmäßig, wo zwischen verschiedenen Funktionseinheiten einer Vermittlungsanlage eine Verbindung kennzeichnende Daten ausgetauscht werden und wo ein fehlerhafter Austausch solcher Daten im ungünstigsten Fall zur Blockierung der Vermittlungsanlage führen kann.

## Patentansprüche

1. Verfahren zur Überwachung der Belegung von an Verbindungen beteiligten Einrichtungen zum Zwecke der Freigabe von fälschlicherweise als belegt geltenden Einrichtungen einer Fernmelde-, insbesondere Fernsprechvermittlungsanlage, mit einem Sprechwegekoppelnetzwerk (KF) und mit Funktionseinheiten, die beim Aufbau von Verbindungen über das Sprechwegekoppelnetzwerk (KF) untereinander vermittlungstechnische Informationen austauschen und Einrichtungen, wie Teilnehmerschaltungen (TS), Wahlaufnahmesätze (WS), Koppelwege und Verbindungssätze (IS, AS) steuern, wobei in den Funktionseinheiten den genannten Einrichtungen zugeordnete Speicher vorgesehen sind, in denen für die jeweiligen Verbindungen maßgebende und mit einer Kontrollinformation ergänzte Belegungsdaten eingetragen sind, welche Daten durch Abfrage eines weiteren Speichers erneuert werden, dadurch gekennzeichnet, daß die Kontrollinformation (K) beim Belegen einer Einrichtung im Zuge eines Verbindungsaufbaus gleichzeitig mit dem Einschreiben einer Belegtkennzeichnung (B) in den zugeordneten Speicher eingetragen wird und periodisch solange regeneriert wird, wie an der betreffenden Verbindung beteiligte periphere Einrichtungen im weiteren Speicher als belegt ermittelt werden, und daß die Kontrollinformationen (K) in den Funktionseinheiten (TS-ST, AS-ST, ZS) periodisch auf ihr Vorhandensein überprüft werden, wobei eine vorhandene Kontrollinformation (K) gelöscht wird, und wobei im Falle des Nichtvorhandenseins einer Kontrollinformation (K) bei gleichzeitig vorhandener Belegtkennzeichnung (B) der entsprechenden Einrichtung deren Belegtkennzeichnung (B) gelöscht und damit diese Einrichtung freigegeben wird.

2. Verfahren nach Anspruch 1, dadurch gekennzeichnet, daß die periodische Regeneration der Kontrollinformation (K) erst nach einer bestimmten Zeitspanne nach dem Zustandekommen einer Verbindung einsetzt und dann in dieser Zeitspanne entsprechenden Zeitabständen solange fortgesetzt wird, wie die Verbindung andauert.

3. Verfahren nach Anspruch 2, dadurch gekennzeichnet, daß diese Zeitspanne größer als die mittlere Dauer eines Gespräches ist.

## Claims

1. A process for monitoring the seizure of devices participating in connections, for the purpose of releasing devices incorrectly considered to be seized, in a telecommunications, in particular a telephone exchange system, comprising a speech path switching network (KF) and function units which exchange items of switching technology information with one another via the speech path switching network (KF) during the estabilshment of connections and control devices such as subscriber circuits (TS), dial reception sets (WS), switching paths and connection sets (IS, AS), wherein the function units contain stores which are assigned to the aforementioned devices and in which are entered items of seizure data which govern the connections in question and are supplemented by an item of checking information, which items of data are renewed by the interrogation of a further store, characterised in that on the seizure of a device in the course of a connection estabilshment the item of checking information (K) is entered in the assigned store simultaneously to the entry of a »seized« characteristic (B) and is periodically regenerated for such time as peripheral devices participating in the connection in question are determined as being seized in the further store, and that it is periodically checked whether the items of checking information (K) are present in the function units (TS, ST, AS-ST, ZS), where any item of checking information (K) which is present is eraded, and where in the event that an item of checking information (K) is not present but at the same time the »seized« characteristic (B) of the corresponding device is in fact present, the »seized« characteristic (B) thereof is erased and thus the device is released.

2. A process as claimed in Claim 1, characterised in that the periodic regeneration of the item of checking information (K) does not commence until after a specific span of time following the occurrence of a connection, and is then continued at intervals of time corresponding to this time span for such time as the connection endures.

3. A process as claimed in Claim 2, characterised in that this interval of time is greater than the average duration of a conversation.

## Revendications

1. Procédé pour surveiller l'occupation de dispositifs participant à des communications, dans le but de libérer des dispositifs, considérés de façon erronnée comme occupés, d'un central de télécommunications, notamment un central téléphonique, qui comporte un réseau de couplage des voies téléphoniques (KF), ainsi que des unités fonctionnelles qui, lors de l'établissement de communications par l'intermédiaire du réseau de couplage des voies téléphoniques (KF), échangent entre elles des informations concernant la technique de communication, et commandent des dispositifs, tels que des circuits d'abonnés (TS), des circuits de sélection (WS), des voies de couplage et des circuits de connection (IS, AS) des mémoires associées auxits dispositifs étant prévues dans lesdites unités fonctionnelles, mémoires dans lesquelles sont introduites des données d'occupation, qui sont déterminantes pour les communications respectives et sont complètées par une information de contrôle et qui sont renouvelées par interrogation d'une autre mémoire, caractérisé par le fait que lors de l'occupation d'un dispositif au cours de l'établissement d'une communication, l'information de contrôle (K) est introduite dans la mémoire associée en même temps que l'inscription d'un signal caractéristique d'occupation (B) et est régénéré périodiguement aussi longtemps que dans l'autre mémoire des dispositifs périphériques participant à la communication concernée sont déterminés comme occupés, et que la présence d'informations de contrôle (K) est contrôlée périodiquement dans les unités fonctionnelles (TS-ST, AS-ST, ZS), une information de contrôle présente (K) étant effacée, et, en cas d'absence d'une information de contrôle (K), avec présence simultanée d'un signal caractéristique d'occupation (B) du dispositif correspondant, son signal caractéristique d'occupation (B) étant effacé et ce dispositif étant par conséquent libéré.

2. Procédé suivant la revendication 1 caractérisé par le fait que la régénération périodique de l'information de contrôle (K) n'est effectuée qu'après un intervalle de temps déterminé après l'établissement effectif d'une communication, puis est prolongée de laps de temps correspondants dans cet intervalle de temps tant que la communication dure.

3. Procédé suivant la revendication 2, caractérisé par le fait que cet intervalle de temps est plus long que la durée moyenne d'une conversation.

FIG.1

FIG. 2

FIG. 3

9